# EUROPÄISCHE PATENTANMELDUNG

(11) **EP 4 512 543 A1**
(43) Veröffentlichungstag der Anmeldung: **26.02.2025**
(21) Anmeldenummer: 23192775.7
(22) Anmeldetag: 22.08.2023
(51) Int. Cl.: B09C 1/02, B30B 9/22, B09C 1/08

(54) **VERFAHREN ZUR REINIGUNG VON BODEN**

(71) Anmelder: Züblin Umwelttechnik GmbH, 71706 Markgröningen (DE)
(72) Erfinder: HECKEMEIER, Dirk, 71706 Markgröningen (DE)
(74) Vertreter: Karzel, Philipp

(57) **Zusammenfassung**

Die Erfindung betrifft ein Verfahren zur Reinigung von mit Per- und Polyfluorierten Alkylsubstanzen (PFAS) verunreinigtem Boden von PFAS. Der Boden liegt ganz oder teilweise in einer Feinfraktion (1) vor. Die Feinfraktion (1) wird zur Reinigung von PFAS mit Wasser (2) gewaschen.

## Beschreibung

Die Erfindung betrifft ein Verfahren zur Reinigung von mit per- und polyfluorierten Alkylsubstanzen (PFAS) belastetem Boden von PFAS nach dem Oberbegriff des Anspruchs 1 und die Verwendung einer Filtermembranpresse zur Reinigung von Boden.

Um Boden in Bodenwaschanlagen von Schadstoffen reinigen zu können, erfolgt im Allgemeinen ein Aufschluss des Bodens in eine Grob-, eine Mittel- und eine Feinfraktion. Diese drei verschiedenen Fraktionen unterscheiden sich in den Partikelgrößen. Die Grobfraktion weist Partikel mit einem minimalen Partikeldurchmesser von mindestens 2 mm auf. Hierzu zählen beispielsweise Kiesel. Die Mittelfraktion weist beispielsweise Sande auf. Die Partikel der Feinfraktion besitzen Partikeldurchmesser von maximal 100 µm, insbesondere von maximal 80 µm, insbesondere von maximal 65 µm, insbesondere von maximal 63 µm.

Die Grob- und die Mittelfraktion können bisher in der Regel effektiv durch Waschen mit Wasser von verschiedensten Schadstoffen gereinigt und wiederverwendet werden. Die Feinfraktion ist nur mit großem technischen Aufwand zu reinigen. Im Boden eingebundene Organika, insbesondere Schadstoffe mit einer geringen Wasserlöslichkeit (Kohlenwasserstoffe, polyzyklische aromatische Kohlenwasserstoffe und ähnliche Schadstoffe) erschweren das Herauslösen von Schadstoffen mittels Wasser. Aufgrund der kleinen Partikelgröße ergeben sich oft nur sehr kleine Hohlräume für Wasser, und in der Regel gestaltet es sich schwierig, Wasser durch die Feinfraktion zu leiten. Daher wird die Feinfraktion mit Hilfe von Waschwasser ausgeschleust. Anschließend wird die Feinfraktion in Andickeranlagen aufkonzentriert, entwässert und anschließend in gepresster Form auf Deponien entsorgt.

Der hierdurch entstehende Verlust an Boden muss vor Ort ausgeglichen werden. Dies ist aufwändig und kostspielig. Insbesondere per- und polyfluorierte Alkylsubstanzen bereiten bei der Entsorgung Probleme. Diese Schadstoffe fallen beispielsweise in der Textilindustrie bei der Herstellung von mikroporösen Membranen (Nässepermembranen) aus direktem (expandiertem) Polytetrafluorethylen (ePTFE), die winddicht, wasserdicht, aber wasserdampfdurchlässig und damit atmungsaktiv sind, an. Vor allem Feuerlöschschäume, die Papierindustrie und galvanische Verfahren sind Quellen für PFAS. PFAS-Rückstände finden sich zu einem signifikanten Anteil auch in der Feinfraktion eines mit PFAS verunreinigten Bodens. Die Entsorgung der entwässerten und gepressten Feinfraktion auf Deponien ist schwierig, da es nur wenige Deponien gibt, die mit PFAS verunreinigte Materialien annehmen, und weil die Deponierung teuer ist. Auch der Transport der entwässerten Feinfraktion generiert Kosten.

Auch eine thermische Behandlung von mit PFAS verunreinigtem Boden zur Zersetzung der Schadstoffe bei hohen Temperaturen ist kostenintensiv.

Der Erfindung liegt die Aufgabe zugrunde, ein Verfahren anzugeben, mit dem eine kostengünstige und effektive Reinigung eines mit per- und polyfluorierten Alkylsubstanzen (PFAS) verunreinigten Bodens von den per- und polyfluorierten Alkylsubstanzen (PFAS) möglich ist.

Diese Aufgabe wird durch ein Verfahren mit den Merkmalen des Anspruchs 1 gelöst.

Ebenfalls wird diese Aufgabe durch die Verwendung einer Filtermembranpresse zur Reinigung der Feinfraktion eines mit PFAS verunreinigten Bodens gemäß Anspruch 15 gelöst.

Die Erfindung sieht vor, dass die Feinfraktion des mit PFAS verunreinigten Bodens zur Reinigung von PFAS mit Wasser gewaschen wird. Hierdurch ist eine kostengünstige und effektive Möglichkeit gegeben, die Feinfraktion zu reinigen. Die Bodenreinigung der Feinfraktion mit PFAS kann überraschenderweise durch die Reinigung mit Wasser so weit gesenkt werden, dass die Feinfraktion nicht auf einer Deponie entsorgt werden muss, sondern vor Ort wieder verwendet werden kann. Damit entfällt die teure und aufwändige Aufschüttung von entsorgtem, verunreinigtem Boden mit neuem Material. Ebenso entfällt die mühselige Suche nach einer Deponie, auf der die entwässerte, gepresste und mit PFAS verunreinigte Feinfraktion deponiert werden kann. Die Deponiekosten können eingespart werden.

Aufgrund der in der Feinfraktion gebundenen Organika und aufgrund der kleinen Partikelgröße der Feinfraktion war man bisher davon ausgegangen, dass eine Reinigung mit Wasser nicht mit hinreichend großer Effizienz möglich ist und daher nicht auf wirtschaftliche Weise betrieben werden kann. Dies trifft auch auf die Verunreinigung mit den allermeisten Schadstoffen, wie beispielsweise Mineralöl, zu. Es hat sich jedoch gezeigt, dass die Wasseraffinität von PFAS ausreichend groß ist, um eine Reinigung auch der Feinfraktion von PFAS mit Wasser effizient und wirtschaftlich durchführen zu können. Die vorliegende Erfindung löst ein jahrelang bestehendes Problem und überwindet ein jahrelang bestehendes Vorurteil aus dem Stand der Technik.

In vorteilhafter Weiterbildung der Erfindung wird die Feinfraktion vor der Reinigung von PFAS mit Wasser einem Druck von 5 bar bis 8 bar, insbesondere von 6 bar bis 7 bar, ausgesetzt. Dadurch erfolgt bereits eine teilweise Entwässerung der Feinfraktion. Die Feinfraktion wird insbesondere komprimiert. Es hat sich gezeigt, dass sich durch diese Druckbehandlung bei der anschließenden Reinigung mit Wasser eine besonders große Effizienz für die Reinigung von PFAS ergibt. Insbesondere wird die Feinfraktion vor der Reinigung von PFAS mit Wasser mittels einer Hochdruckpumpe dem Druck ausgesetzt. Die Hochdruckpumpe pumpt die in Form von Schlamm vorliegende Feinfraktion vorteilhaft in einen Druckraum und setzt die Feinfraktion hierbei unter Druck.

Vorteilhaft wird die Feinfraktion während der Reinigung von PFAS mit Wasser einem Druck von mindestens 1,5 bar, insbesondere von mindesten 2 bar, insbesondere von mindestens 3 bar, ausgesetzt. Dadurch wird die Feinfraktion während der Reinigung von PFAS mit Wasser fortwährend wieder entwässert. Zweckmäßig kann die Feinfraktion aufgrund des Drucks in einen Druckraum gepresst werden. Hierdurch kann das Wasser zur Reinigung der Feinfraktion von PFAS effektiv durch die Feinfraktion geleitet werden. Wegigkeiten zwischen einer Innenseite des Druckraums, insbesondere einer Innenseite der Nachpresseinheit, und der Feinfraktion können auf diese Weise minimiert sein. Während der Reinigung der Feinfraktion von PFAS mit Wasser wird die Feinfraktion insbesondere ausschließlich von einer Nachpresseinheit unter Druck gesetzt. Dadurch kann die Feinfraktion auf einfache Weise im Druckraum gehalten sein. Insbesondere wird die Feinfraktion während der Reinigung mit Wasser nicht von der Hochdruckpumpe unter Druck gesetzt.

Zweckmäßig ist die Feinfraktion nach der Reinigung von PFAS mit Wasser einem Druck von mindestens 12 bar, insbesondere von mindestens 15 bar ausgesetzt. Dadurch wird die Feinfraktion nach der Reinigung von PFAS mit Wasser auf effiziente Weise entwässert. Nach der Reinigung von PFAS mit Wasser wird die Feinfraktion insbesondere ausschließlich von der Nachpresseinheit unter Druck gesetzt. Insbesondere wird die Feinfraktion nach der Reinigung mit Wasser nicht von der Hochdruckpumpe unter Druck gesetzt.

Insbesondere wird die Feinfraktion vor der Reinigung von PFAS mit Wasser nicht zerkleinert. Dadurch ist für die Reinigung der Feinfraktion kein weiterer Arbeitsschritt erforderlich.

In vorteilhafter Weiterbildung der Erfindung ist vorgesehen, dass die Feinfraktion in einer Entwässerungseinheit entwässert wird. Die Reinigung der Feinfraktion von PFAS mit Wasser erfolgt vorteilhaft in derselben Entwässerungseinheit, in der die Feinfraktion auch entwässert wird. Insbesondere wird die Feinfraktion im Anschluss an die Reinigung von PFAS mit Wasser in der Entwässerungseinheit ohne zwischenzeitliche Entfernung der Feinfraktion aus der Entwässerungseinheit in der Entwässerungseinheit entwässert. Dadurch kann das Verfahren effizient und kostengünstig durchgeführt werden. Ein Entladen und/oder ein Transport der Feinfraktion ist zwischen den Verfahrensschritten nicht erforderlich. Insbesondere kann das Verfahren auf schnelle Weise durchgeführt werden.

Zweckmäßig wird mittels der Entwässerungseinheit Filtrationswasser aus der Feinfraktion gepresst. Das Filtrationswasser verlässt die Feinfraktion zumindest auch in eine Filtrationsrichtung. Insbesondere ist die Entwässerungseinheit so ausgelegt, dass das Filtrationswasser die Feinfraktion zumindest auch in eine Filtrationsrichtung verlässt. Bevorzugt wird das Wasser so durch die Entwässerungseinheit geleitet, dass es die Feinfraktion in einer Waschrichtung durchströmt. Zweckmäßig sind zumindest ein vektorieller Anteil der Filtrationsrichtung und ein vektorieller Anteil der Waschrichtung entgegengesetzt zueinander orientiert. Insbesondere verlaufen die Waschrichtung und die Filtrationsrichtung entgegengesetzt zueinander. Dadurch wird die Feinfraktion während der Entwässerung mit Wasser gewaschen. Dadurch können Schadstoffe wie PFAS besonders effizient aus der Feinfraktion gespült und gelöst werden. Sobald Filtrationswasser aus der Feinfraktion gepresst wird, können die entstandenen Hohlräume mit frischem Wasser zur Reinigung der Feinfraktion gespült werden. Umgekehrt können PFAS, die bei der Reinigung mit Wasser gelöst werden, mit dem Filtrationswasser beim Pressen in der Entwässerungseinheit die Feinfraktion verlassen.

In vorteilhafter Ausgestaltung der Erfindung weist die Entwässerungseinheit eine Nachpresseinheit auf. Zweckmäßig wird die Feinfraktion mit der Nachpresseinheit in einen Druckraum der Entwässerungseinheit gepresst. Dadurch werden Wegigkeiten für das Wasser zwischen der Feinfraktion und der Entwässerungseinheit vermieden. Auf diese Weise kann das Wasser effizient zur Reinigung der Feinfraktion genutzt werden. Aufgrund der Vermeidung von Wegigkeiten muss das Wasser fast vollständig die Feinfraktion durchströmen. Ein Strömen am Rand zwischen der Entwässerungseinheit und der Feinfraktion ist vermieden. Die Feinfraktion ist aufgrund des Drucks durch die Nachpresseinheit sicher gehalten. Die Feinfraktion kann vom Druck der Hochdruckpumpe entkoppelt sein. Auf diese Weise liegen statische Verhältnisse vor.

Zweckmäßig kann die Feinfraktion mittels der Entwässerungseinheit einem Druck ausgesetzt werden. Insbesondere kann die Feinfraktion mittels der Entwässerungseinheit vor der Reinigung von PFAS mit Wasser einem Druck ausgesetzt werden. Dadurch kann die Feinfraktion mittels der Entwässerungseinheit vor und/oder während der Reinigung von PFAS mittels Wasser entwässert werden. Vorteilhaft kann die Feinfraktion mittels der Entwässerungseinheit während der Reinigung von PFAS mit Wasser einem Druck ausgesetzt werden. Zweckmäßig kann die Feinfraktion mittels der Entwässerungseinheit nach der Reinigung von PFAS mit Wasser einem Druck ausgesetzt werden. Dadurch kann die endgültige Entwässerung der Feinfraktion auf einfache und effiziente Weise in der Entwässerungseinheit erfolgen.

Vorteilhaft ist die Entwässerungseinheit eine Membranfilterpresse. Dadurch kann die Feinfraktion während der Reinigung von PFAS mit Wasser unter Druck gesetzt werden. Wegigkeiten für das Wasser zwischen der Feinfraktion und einer Innenwand der Entwässerungseinheit während der Reinigung mit Wasser können auf diese Weise auf einfache Art vermieden werden. Die Feinfraktion kann von der Membranfilterpresse auf einfache Weise während der Reinigung gehalten werden. Die Reinigung mit Wasser kann im Gegenstromverfahren erfolgen. Filtrationswasser und Wasser strömen hierbei im Wesentlichen in entgegengesetzte Richtungen, insbesondere zeitversetzt. Nach der Reinigung der Filterfraktion von PFAS mit Wasser kann mittels der Membranfilterpresse auf einfache, schnelle und effiziente Weise eine Entwässerung der Feinfraktion erfolgen.

Zweckmäßig beträgt der Trockensubstanzgehalt der Feinfraktion zu Beginn des Verfahrens maximal 30 Gew.-%. Insbesondere beträgt der Trockensubstanzgehalt der Feinfraktion zu Beginn des Verfahrens von 10 Gew.-% bis 30 Gew.-%, insbesondere von 15 Gew.-% bis 25 Gew.-%. Vorteilhaft beträgt der Trockensubstanzgehalt der Feinfraktion nach dem vollständigen Entwässern mittels der Entwässerungseinheit mindestens 60 Gew.-%. Insbesondere beträgt der Trockensubstanzgehalt der Feinfraktion nach dem vollständigen Entwässern mittels der Entwässerungseinheit von 60 Gew.-% bis 80 Gew.-%, insbesondere von 65 Gew.-% bis 75 Gew.-%. Insbesondere weist die Feinfraktion nach der Reinigung mit Wasser, insbesondere nach dem vollständigen Entwässern mittels der Entwässerungseinheit, höchstens 3 µg PFAS pro Kilogramm Trockensubstanz auf.

Insbesondere weist das Eluat der Feinfraktion vor der Reinigung von PFAS mit Wasser eine PFAS-Massenkonzentration von mindestens 0,1 µg/l, insbesondere von mindestens 3,0 µg/l, insbesondere von mindestens 6,0 µg/l, insbesondere von mindestens 15 µg/l, insbesondere von mindestens 20 µg/l, insbesondere von mindestens 150 µg/l, insbesondere von mindestens 500 µg/l auf.. Insbesondere weist das Eluat der Feinfraktion vor der Reinigung von PFAS mit Wasser eine PFAS-Massenkonzentration von 15,0 µg/l bis 150 µg/l, insbesondere von 150 µg/l bis 500 µg/l, insbesondere von höchstens 1000 µg/l auf. Vorteilhaft weist das Eluat der Feinfraktion nach der Reinigung von PFAS mit Wasser eine PFAS-Massenkonzentration von maximal 15 µg/l, insbesondere von maximal 6 µg/l, insbesondere von maximal 3,0 µg/l, insbesondere von maximal 1,0 µg/l, insbesondere von maximal 0,3 µg/l, insbesondere von maximal 0,1 µg/l auf. Insbesondere weist das Eluat der Feinfraktion nach der Reinigung von PFAS mit Wasser eine PFAS-Massenkonzentration von 50%, insbesondere von 30%, insbesondere von 10% der PFAS-Massenkonzentration vor der Reinigung mit Wasser auf. Dadurch ist es möglich, die gereinigte Feinfraktion weiterhin vor Ort einzusetzen. Eine Deponierung auf einer Schadstoffdeponie ist nicht erforderlich.

Insbesondere kann der Wert der PFAS-Massenkonzentration des Eluats der Feinfraktion durch die Reinigung der Feinfraktion mit Wasser so weit gesenkt werden, dass ein eingeschränkter Einbau der gereinigten Feinfraktion in technischen Bauwerken mit definierten Sicherheitsmaßnahmen möglich ist. Dies entspricht der im "Leitfaden zur PFAS-Bewertung" des Bundesministeriums für Umwelt, Naturschutz, nukleare Sicherheit und Verbraucherschutz vom 21.02.2022 definierten Verwertungskategorie VK 3. Die Definitionen dieses Leitfadens sind vollständiger Bestandteil der vorliegenden Beschreibung. Die definierte Sicherheitsmaßnahme kann darin bestehen, den Abstand der eingebauten gereinigten Feinfraktion zum höchsten zu erwartenden Grundwasserstand so zu wählen, dass er mindestens 1,5 m beträgt.

Insbesondere kann der Wert der PFAS-Massenkonzentration des Eluats der Feinfraktion durch die Reinigung der Feinfraktion mit Wasser so weit gesenkt werden, dass ein eingeschränkter offener Einbau der gereinigten Feinfraktion in Gebieten mit erhöhten PFAS-Gehalten möglich ist. Dies entspricht der im "Leitfaden zur PFAS-Bewertung" des Bundesministeriums für Umwelt, Naturschutz, nukleare Sicherheit und Verbraucherschutz vom 21.02.2022 definierten Verwertungskategorie VK 2. Die Einschränkung des offenen Einbaus kann darin bestehen, dass der Abstand der eingebauten gereinigten Feinfraktion zum höchsten zu erwartenden Grundwasserstand mindestens 1,5 m beträgt.

Insbesondere kann der Wert der PFAS-Massenkonzentration des Eluats der Feinfraktion durch die Reinigung der Feinfraktion mit Wasser so weit gesenkt werden, dass ein uneingeschränkter offener Einbau der gereinigten Feinfraktion möglich ist. Dies entspricht der im "Leitfaden zur PFAS-Bewertung" des Bundesministeriums für Umwelt, Naturschutz, nukleare Sicherheit und Verbraucherschutz vom 21.02.2022 definierten Verwertungskategorie VK 1.

Insbesondere beträgt der PFAS-Massenanteil der Originalsubstanz vor der Reinigung mehr als 30 µg/kg. Die Originalsubstanz liegt als Trockensubstanz vor. Der PFAS-Massenanteil der Originalsubstanz vor der Reinigung kann von 30 µg/kg bis 50 µg/kg, insbesondere bis 500 µg/kg betragen.

Nach der Reinigung beträgt der Massenanteil an PFAS-gesamt insbesondere weniger als 8 µg/kg, der Massenanteil an PFOS (Perfluoroctansulfonsäure) und PFOA (Perfluoroctancarbonsäure) jeweils weniger als 3 µg/kg. Die gereinigte Substanz liegt als Trockensubstanz vor.

Die Feinfraktion besteht aus Partikeln. Die Partikel weisen einen maximalen Durchmesser von 100 µm, insbesondere von 80 µm, insbesondere von 65 µm, insbesondere von 63 µm auf.

Vorteilhaft erfolgt die Reinigung der Feinfraktion von PFAS mit Wasser mit Wasser, dem ein Tensid zugemischt ist. Es kann auch die Beimischung verschiedener Tenside vorgesehen sein.

Insbesondere erfolgt die Reinigung der Feinfraktion von PFAS mit Wasser mit Wasser, dem ein Alkohol zugemischt ist. Es kann auch die Beimischung verschiedener Alkohole vorgesehen sein.

Zweckmäßig erfolgt die Reinigung der Feinfraktion von PFAS mit Wasser mit Wasser, dem ein organisches Lösungsmittel zugemischt ist. Es kann auch die Beimischung verschiedener organischer Lösungsmittel vorgesehen sein.

Insbesondere erfolgt die Reinigung der Feinfraktion von PFAS mit Wasser mit Wasser, dem ein Biopolymer zugemischt ist. Es kann auch die Beimischung verschiedener Biopolymere vorgesehen sein. Das Biopolymer ist beispielsweise ein Protein. Es kann auch vorgesehen sein, dass das Biopolymer Stärke ist. Dem Wasser können auch sowohl Stärke als auch ein Protein zugemischt sein.

Vorteilhaft erfolgt die Reinigung der Feinfraktion von PFAS mit Wasser mit Wasser, dem ein Tensid und/oder Alkohol und/oder ein organisches Lösungsmittel und/oder ein Biopolymer zugemischt ist. Es kann auch die Beimischung verschiedener Tenside und/oder Alkohole und/oder organischer Lösungsmittel und/oder Biopolymere vorgesehen sein.

Insbesondere können dem Wasser kationische, zwitterionische, neutrale und/oder anionische Tenside beigemischt werden. Vorteilhaft wird als Alkohol zur Beimischung zu dem Wasser Isopropanol und/oder Ethanol verwendet.

Erfindungsgemäß ist die Verwendung einer Filtermembranpresse zur Reinigung der Feinfraktion eines mit PFAS verunreinigten Bodens vorgesehen.

Insbesondere wird das Filtrationswasser mit Aktivkohle gereinigt.

Ein Ausführungsbeispiel der Erfindung wird im Folgenden anhand der Zeichnung erläutert. Es zeigen:
- Fig. 1: ein Prozessdiagramm eines Verfahrens zur Reinigung von Boden von per- und polyfluorierten Alkylsubstanzen,
- Fig. 2: ein Rohrleitungs- und Instrumentenfließschema mit einer als Kammerfilterpresse ausgebildeten Entwässerungseinheit,
- Fig. 3: eine schematische Schnittdarstellung einer als Kammerfilterpresse ausgebildeten Entwässerungseinheit und
- Fig. 4: eine schematische Schnittdarstellung eines Schnitts entlang der Schnittebene IV-IV in Fig. 3.

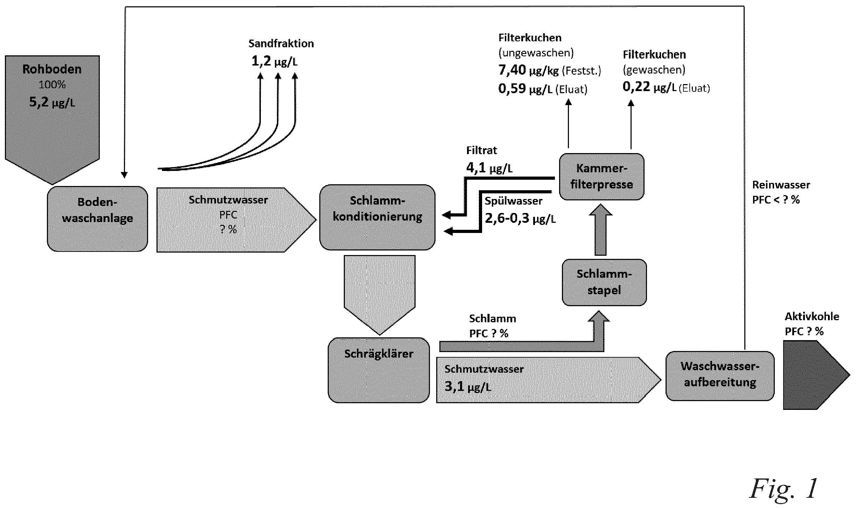

Fig. 1 zeigt ein Ablaufdiagramm eines Verfahrens zur Reinigung von Boden von per- und polyfluorierten Alkylsubstanzen. Per- und polyfluorierte Alkylsubstanzen werden auch als PFAS bezeichnet. In der Vergangenheit war auch der Begriff per- und polyfluorierte Tenside (PFT) für PFAS geläufig. PFAS werden auch als per- und polyfluorierte Chemikalien (PFC) bezeichnet.

Diese Stoffgruppe umfasst mehr als 3000 verschiedene Stoffe. PFAS kommen nicht natürlich vor. Die organischen Verbindungen bestehen aus Kohlenstoffketten verschiedener Längen, bei denen die Wasserstoffatome vollständig (perfluoriert) oder teilweise (polyfluoriert) durch Fluoratome ersetzt sind. PFAS werden wegen ihrer besonderen physikalisch-chemischen Eigenschaften industriell hergestellt und in einer Vielzahl von Produkten verwendet. Beispiele für ihren Einsatz sind die Perfluorpolymer-Herstellung, ihre Verwendung bei der Verchromung, bei der Herstellung von Halbleitern oder auch bei fotografischen Prozessen. Weiterhin kommen PFAS in zahlreichen Konsumgütern zum Einsatz, wie beispielsweise in Farben, Leder- und Textilbeschichtungen, (Outdoor-)Kleidung, Schuhen, Teppichen, Verpackungen, Skiwachs, Boden- und Autopflegemittel sowie zur Produktion von Papieren mit schmutz-, fett- und wasserabweisenden Eigenschaften und als Bestandteil von Imprägnier- und Schmiermitteln.

Durch die Herstellung und Verwendung können PFAS auf direktem und indirektem Weg in die Umwelt gelangen. Direkte Quellen umfassen die Freisetzung (bei ihrer Herstellung und Verarbeitung) in die Luft oder in Gewässer. Die Ausbringung von Klärschlämmen als Dünger oder Bodenhilfsstoff kann bei Kontaminierung mit PFAS zu großflächigen Verunreinigungen der Umwelt führen. Der indirekte Eintrag in die Umwelt kann durch die Anwendung von Verbraucherprodukten oder bei deren Entsorgung erfolgen - beispielsweise durch Rückstände in Produkten, durch das Waschen von behandelten Textilien und durch Umwandlungs- und Abbauprozesse in der Umwelt. PFAS verbleiben nach der Aufnahme lange im menschlichen Organismus. Sie besitzen in Tierversuchen lebertoxische, krebserregende und fortpflanzungsgefährdende Eigenschaften.

Die toxische Wirkung auf den menschlichen Organismus macht eine effektive Reinigung von mit PFAS verunreinigtem Boden erforderlich. Fig. 1 zeigt ein Beispiel, bei dem der Rohboden mit einer PFAS-Massenkonzentration von etwa 5,2 µg/l verunreinigt ist. Der Rohboden wird in einer herkömmlichen Bodenwaschanlage gewaschen. Hierbei werden die Grob- und die Mittelfraktion des Rohbodens so weit gereinigt, dass sie PFAS-Massenkonzentrationen unterhalb eines kritischen Grenzwertes aufweisen. Die Grob- und die Mittelfraktion können nach der Waschung in der Bodenwaschanlage direkt wieder ausgebracht werden. Die Grobfraktion enthält Partikel mit einer Größe von größer als 2 mm. Zur Mittelfraktion zählen Partikel mit einer Größe von etwa 100 µm, insbesondere von etwa 63 µm bis 2 mm. Zur Mittelfraktion zählt beispielsweise die Sandfraktion. Partikel mit einer Größe von maximal 100 µm, insbesondere von maximal 80 µm, im Ausführungsbeispiel von maximal 63 µm, verlassen die Bodenwaschanlage gemeinsam mit dem Schmutzwasser in Form von Schlamm. Dieser Schlamm wird im Rahmen einer Schlammkonditionierung für eine bessere Schlammsedimentation konditioniert. Im Ausführungsbeispiel erfolgt eine chemische Konditionierung durch Zugabe von Chemikalien.

Der so vorbereitete Schlamm wird einem Schrägklärer zugeführt. Schrägklärer werden auch als Lamellenklärer bezeichnet. Der Schrägklärer scheidet absetzbare Stoffe (Partikel) effektiv aus Flüssigkeiten ab. Die Funktion des Schrägklärers basiert auf dem Prinzip der Sedimentation: Grundsätzlich können mit dem Schrägklärer also sämtliche Feststoffe einfach und wirtschaftlich abgetrennt werden, die in einer bestimmten Zeit sedimentieren. Der Schrägklärer ist ein druckloses System. Das Schmutzwasser bzw. der konditionierte Schlamm fließt gepumpt oder im freien Gefälle in einen Einlaufkanal des Schrägklärers und in diesem nach unten. Unterhalb von Lamellen wird der Schlamm umgelenkt und fließt durch diese Lamellen nach oben. Die Feststoffe, insbesondere die Partikel der Feinfraktion und ein Teil der darin gebundenen PFAS sinken im Gegenstrom nach unten auf die Lamellen. Im den Schrägklärer verlassenden Schmutzwasser ist bereits ein großer Teil an PFAS gelöst. Es wird einer Waschwasseraufbereitung zugeführt. Hier kann das Schmutzwasser mit Aktivkohle gereinigt werden und/oder wieder der Bodenwaschanlage zugeführt werden. Die den Schrägklärer verlassende Feinfraktion liegt in Form von Schlamm vor. Der Schlamm kann dann in einem Schlammstapel gelagert werden. Der Schlammstapel ist ein Behälter für den Schlamm. Der Schlammstapel wird auch als Schlammstapelbehälter oder Schlammpuffer bezeichnet. Der Schlamm ist pumpbar und kann einer Entwässerungseinheit zugeführt werden. Im Ausführungsbeispiel ist die Entwässerungseinheit eine Kammerfilterpresse.

Der in einer Feinfraktion vorliegende und mit PFAS verunreinigte Boden wird zur Reinigung von PFAS mit Wasser gewaschen. Als Feinfraktion wird der Teil des Bodens bezeichnet, der aus Partikeln mit einem maximalen Durchmesser von 100 µm, insbesondere von 80 µm, insbesondere von 65 µm besteht. Im Ausführungsbeispiel weisen die Partikel der Feinfraktion einen maximalen Durchmesser von 63 µm auf. In den verschiedenen Prozessstadien kann die Feinfraktion außer den Partikeln auch Wasser umfassen.

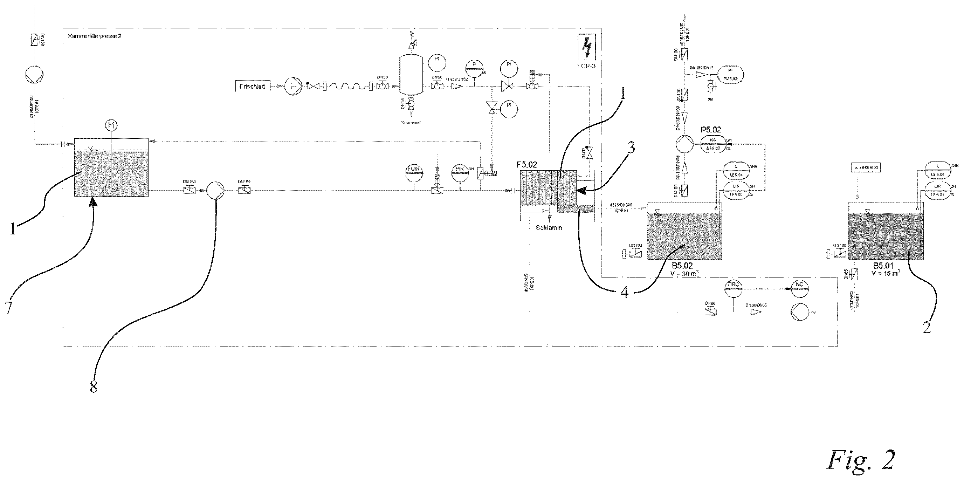

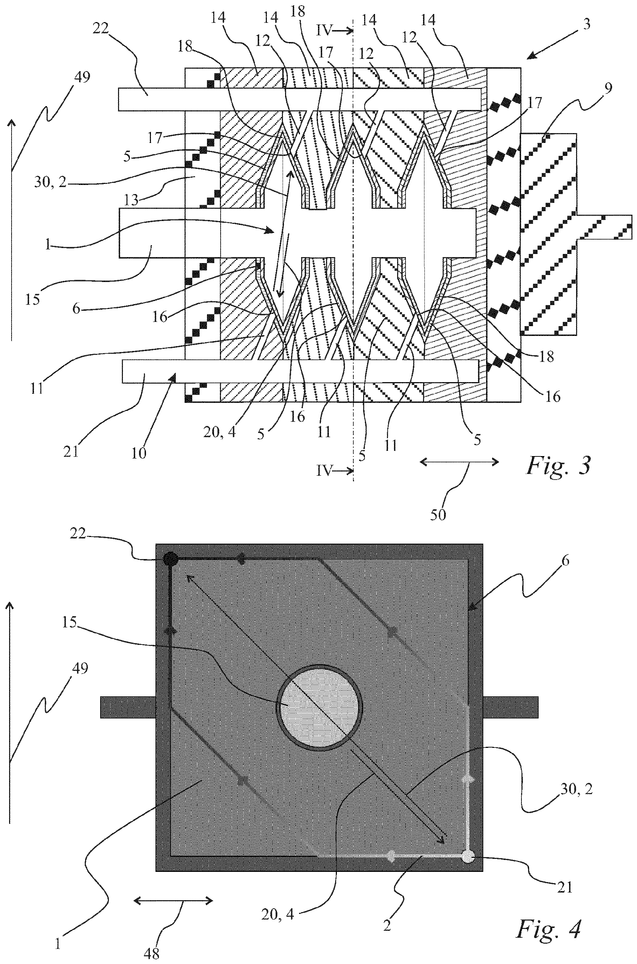

Für eine anfängliche Entwässerung des Schlamms wird die Feinfraktion vor der Reinigung von PFAS mit Wasser einem Druck von 5 bar bis 8 bar ausgesetzt. Im Ausführungsbeispiel wird die als Schlamm vorliegende Feinfraktion vor der Reinigung von PFAS mit Wasser einem Druck von 6 bar bis 7 bar ausgesetzt. Insbesondere wird die Feinfraktion vor der Reinigung von PFAS mit Wasser mittels einer Hochdruckpumpe 8 (Fig. 2) dem Druck ausgesetzt. Während der Reinigung von PFAS mit Wasser wird die Feinfraktion einem Druck von mindestens 1,5 bar, insbesondere von mindestens 2 bar, im Ausführungsbeispiel von mindestens 3 bar, ausgesetzt. Während der Reinigung der Feinfraktion von PFAS mit Wasser wird die Feinfraktion insbesondere ausschließlich von einer Nachpresseinheit 5 (Fig. 3) unter Druck gesetzt. Nach der Reinigung von PFAS mit Wasser wird die Feinfraktion einem Druck von 12 bar, im Ausführungsbeispiel von mindestens 15 bar, ausgesetzt. Nach der Reinigung von PFAS mit Wasser wird die Feinfraktion insbesondere ausschließlich von der Nachpresseinheit 5 unter Druck gesetzt. Vor der Reinigung von PFAS mit Wasser wird die Feinfraktion nicht zerkleinert. Zu Beginn des Verfahrens der als Schlamm vorliegenden Feinfraktion beträgt der Trockensubstanzgehalt der Feinfraktion maximal 30 Gew.-%. Insbesondere beträgt der Trockensubstanzgehalt der Feinfraktion zu Beginn des Verfahrens von 10 Gew.-% bis 30 Gew.-%. Im Ausführungsbeispiel beträgt der Trockensubstanzgehalt der Feinfraktion zu Beginn des Verfahrens von 15 Gew.-% bis 25 Gew.-%.

Das Eluat der Feinfraktion weist vor der Reinigung von PFAS mit Wasser eine PFAS-Massenkonzentration von mindestens 15,0 µg/l auf. Insbesondere weist das Eluat der Feinfraktion vor der Reinigung von PFAS mit Wasser eine PFAS-Massenkonzentration von 15,0 µg/l bis 150,0 µg/l, insbesondere von mindestens 150 µg/l auf. Im Ausführungsbeispiel weist das Eluat der Feinfraktion vor der Reinigung von PFAS mit Wasser eine PFAS-Massenkonzentration von 150 µg/l bis 500 µg/l, insbesondere von mindestens 500 µg/l auf. Bei der Elution werden mit Wasser als Lösungsmittel Schadstoffe unter klar festgelegten Bedingungen aus Stoffen herausgelöst. Die Elution erfolgt gemäß der DIN 19529 aus dem Jahr 2015. Die Elution erfolgt gemäß dem Schüttelverfahren. Um das Eluat der mit PFAS verunreinigten Feinfraktion zu erhalten, wird die Feinfraktion mit Wasser vermischt. Das Wasser/Feststoff-Verhältnis beträgt 2 l/kg. Die Feinfraktion wird eine bestimmte Zeit lang im Wasser hin und her bewegt. Anschließend wird eine Flüssigkeit herausfiltriert. Diese herausfiltrierte Flüssigkeit wird als Eluat bezeichnet. Mittels geeigneter Analyseverfahren kann die PFAS-Massenkonzentration des Eluats bestimmt werden.

Insbesondere beträgt der PFAS-Massenanteil der Originalsubstanz vor der Reinigung mehr als 30 µg/kg. Die Originalsubstanz liegt als Trockensubstanz vor. Der PFAS-Massenanteil der Originalsubstanz vor der Reinigung kann von 30 µg/kg bis 50 µg/kg, insbesondere bis 500 µg/kg betragen.

Die Feinfraktion 1 wird vorzugsweise in einer Entwässerungseinheit 3 entwässert. Im Ausführungsbeispiel nach Fig. 1 ist die Entwässerungseinheit 3 eine Membranfilterpresse. Die Reinigung der Feinfraktion 1 von PFAS mit Wasser erfolgt in derselben Entwässerungseinheit 3, in der die Feinfraktion 1 auch entwässert wird. Im Ausführungsbeispiel wird die Feinfraktion 1 im Anschluss an die Reinigung von PFAS in der Entwässerungseinheit 3 ohne zwischenzeitliche Entfernung der Feinfraktion 1 aus der Entwässerungseinheit 3 in der Entwässerungseinheit 3 entwässert.

Der Trockensubstanzgehalt der Feinfraktion 1 beträgt nach dem vollständigen Entwässern mittels der Entwässerungseinheit 3 mindestens 60 Gew.-%. Insbesondere beträgt der Trockensubstanzgehalt der Feinfraktion 1 nach dem vollständigen Entwässern mittels der Entwässerungseinheit 3 von 60 Gew.-% bis 80 Gew.-%. Im Ausführungsbeispiel beträgt Trockensubstanzgehalt der Feinfraktion 1 nach dem vollständigen Entwässern mittels der Entwässerungseinheit 3 von 65 Gew.-% bis 75 Gew.-%.

Das Eluat der Feinfraktion 1 weist nach der Reinigung von PFAS mit Wasser eine PFAS-Massenkonzentration von maximal 1,0 µg/l auf. Im Ausführungsbeispiel weist das Eluat der Feinfraktion 1 nach der Reinigung von PFAS mit Wasser eine PFAS-Massenkonzentration von maximal 0,1 µg/l auf. Diese Werte sind deutlich geringer als die Werte, die der Filterkuchen (die Feinfraktion 1) aufweisen würde, wenn er (sie) nicht in der Entwässerungseinheit gewaschen würde. In Fig. 1 ist beispielsweise ein Wert von 0,59 µg/l für das Eluat der ungewaschenen Feinfraktion 1 angegeben. Dadurch, dass die Feinfraktion 1 zur Reinigung von PFAS mit Wasser gewaschen wird, ist die PFAS-Massenkonzentration nach dem Waschen mit Wasser 2 so gering, dass auch die Feinfraktion 1 wieder ausgebracht werden kann, insbesondere im Rahmen eines uneingeschränkten offenen Einbaus der gereinigten Feinfraktion. Eine Deponierung der Feinfraktion 1 ist dann nicht mehr erforderlich.

Nach der Reinigung beträgt der Massenanteil an PFAS-gesamt insbesondere weniger als 8 µg/kg, der Massenanteil an PFOS (Perfluoroctansulfonsäure) und PFOA (Perfluoroctancarbonsäure) jeweils weniger als 3 µg/kg. Die gereinigte Substanz liegt als Trockensubstanz vor.

Im Ausführungsbeispiel wird zur Reinigung der Feinfraktion 1 eines mit PFAS verunreinigten Bodens eine Filtermembranpresse verwendet. Fig. 2 zeigt ein Rohrleitungs- und Instrumentenfließschema mit einer solchen Filtermembranpresse. In einem Behälter 7 liegt die Feinfraktion 1 in Form von Schlamm vor. In den Behälter 7 gelangt die Feinfraktion 1 aus dem in Fig. 1 dargestellten Schrägklärer. Aus dem Behälter 7 wird die Feinfraktion 1 der als Filtermembranpresse ausgebildeten Entwässerungseinheit 3 zugeführt.

Im Ausführungsbeispiel wird die Feinfraktion 1 aus dem Behälter 7 in die Entwässerungseinheit 3 gepumpt. Hierfür ist die Hochdruckpumpe 8 vorgesehen. Die Hochdruckpumpe 8 ist zwischen dem Behälter 7 und der Entwässerungseinheit 3 angeordnet. Die Hochdruckpumpe 8 ist Bestandteil der Entwässerungseinheit 3.

Mittels der Entwässerungseinheit 3 wird Filtrationswasser 4 aus der Feinfraktion 1 gepresst. Das hierbei entstehende Filtrationswasser 4 kann mittels Aktivkohle von PFAS gereinigt werden. Im Ausführungsbeispiel ist die Entwässerungseinheit eine Membranfilterpresse. Die Fig. 3 und 4 zeigen Schnittdarstellungen durch die entsprechende Entwässerungseinheit 3. Die Entwässerungseinheit 3 umfasst mindestens zwei, im Ausführungsbeispiel mehrere, Filterplatten 14. Die Entwässerungseinheit 3 umfasst mindestens einen Druckraum 6. Im Ausführungsbeispiel umfasst die Entwässerungseinheit 3 mehrere Druckräume 6. Der mindestens eine Druckraum 6 ist zwischen zwei Filterplatten 14 ausgebildet. Die Filterplatten 14 bestehen aus einem festen, starren Material, beispielsweise Stahl. Die Filterplatten 14 besitzen an ihrer Oberfläche jeweils mindestens eine, insbesondere auf jeder Seite eine, Vertiefung, insbesondere eine wannenförmige Vertiefung. Zwei Vertiefungen von unterschiedlichen Filterplatten 14 bilden einen Druckraum 6. Die Filterplatten 14 sind in einer Bewegungsrichtung 50 entlang einer nicht dargestellten Lagerung verschiebbar. Auf diese Weise können die Filterplatten 14 aufeinander zu und voneinander weg bewegt werden. Dadurch kann der Druckraum 6 geöffnet werden. Dadurch ist der Druckraum 6 auf einfache Weise zugänglich, beispielsweise zur Entnahme von im Druckraum 6 entwässerter und gereinigter Feinfraktion 1.

Für die Reinigung der Feinfraktion 1 werden die Filterplatten 14 zunächst so weit wie möglich aufeinander zu bewegt. Die Filterplatten 14 liegen dann aneinander an. Zwei unmittelbar benachbarte Filterplatten 14 begrenzen den Druckraum 6. Dieser Zustand der Entwässerungseinheit 3 wird Entwässerungszustand genannt. Die Entwässerungseinheit 3 umfasst eine Presseinheit 9. Mittels der Presseinheit 9 werden die Filterplatten 14 aufeinander zu bewegt. Während der Entwässerung und/oder während der Reinigung der Feinfraktion 1 werden die Filterplatten 14 mittels der Presseinheit 9 zusammengehalten. Die Entwässerungseinheit 3 umfasst eine Kopfplatte 13. Mittels der Presseinheit 9 werden die Filterplatten 14 in Bewegungsrichtung 50 gegen die Kopfplatte 13 gedrückt. Die Kopfplatte 13 ist ortsfest und unverschiebbar in der Entwässerungseinheit 3 angeordnet. Die Presseinheit 9 ist im Ausführungsbeispiel ein Hydraulikzylinder.

Der Druckraum 6 ist ein Hohlraum zwischen zwei unmittelbar benachbarten, gegeneinander gepressten Filterplatten 14. Die Feinfraktion 1 wird in den Druckraum 6 geleitet. Im Ausführungsbeispiel umfasst die Entwässerungseinheit 3 einen Schlammzulauf 15. Der Schlammzulauf 15 durchdringt im Entwässerungszustand zumindest eine Filterplatte 14, die den Druckraum 6 begrenzt. Im Ausführungsbeispiel durchdringt der Schlammzulauf 15 mehrere Filterplatten 14, so dass in alle Druckräume 6 über den Schlammzulauf 15 Schlamm gelangen kann. Im Ausführungsbeispiel durchdringt der Schlammzulauf 15 die Kopfplatte 13, insbesondere in Bewegungsrichtung 50, insbesondere in Bewegungsrichtung 50 vollständig. Insbesondere sind alle Druckräume 14 im Entwässerungszustand durch den Schlammzulauf 15 miteinander verbunden.

Die Entwässerungseinheit 3 umfasst eine erste Druckraumleitung 11 und eine zweite Druckraumleitung 12. Die erste Druckraumleitung 11 ist fluidisch mit dem Druckraum 6, insbesondere über eine erste Druckraumöffnung 16, verbunden. Die zweite Druckleitung 12 ist fluidisch mit dem Druckraum 6, insbesondere über eine zweite Druckraumöffnung 17, verbunden. Zumindest durch eine Druckraumleitung 11, 12, im Ausführungsbeispiel durch die erste Druckraumleitung 11 und durch die zweite Druckraumleitung 12 kann Flüssigkeit aus dem Druckraum 6 austreten.

Die Entwässerungseinheit 3 umfasst ein Filterelement 18. Das Filterelement 18 dient dazu, die Feinfraktion 1 im Druckraum 6 zu halten und Flüssigkeit aus dem Druckraum 6 austreten zu lassen. Das Filterelement 18 ist durchlässig für Flüssigkeit und undurchlässig für Feststoffe, insbesondere für Feststoffe mit einer Partikelgröße von mindesten 5 µm. Das Filterelement 18 ist im Ausführungsbeispiel ein Filtertuch. Das Filterelement 18 deckt die erste Druckraumöffnung 16 ab. Das Filterelement 18 deckt die zweite Druckraumöffnung 17 ab. Das Filterelement 18 liegt an einer Innenseite des Druckraums 6 an. Das Filterelement 6 kleidet den Druckraum 6 mit Ausnahme der Öffnung, insbesondere der Öffnungen, für den Schlammzulauf 15 vollständig aus.

Bei der Entwässerungseinheit 3 handelt es sich um eine besondere Art einer Kammerfilterpresse.

Über den Schlammzulauf 15 wird zu reinigende Feinfraktion 1, insbesondere in Form von Schlamm, in den Druckraum 6 gepumpt. Insbesondere wird die Feinfraktion 15 über den Schlammzulauf 15 in alle Druckräume 6 gepumpt. Der Schlammzulauf 15 ist zumindest abschnittsweise rohrförmig. Der Schlammzulauf 15 ist zumindest auch durch die Filterplatten 14 gebildet.

Der Druckraum 6 wird mit der Feinfraktion 1, insbesondere mittels der Hochdruckpumpe 8, mit einem bestimmten Druck befüllt. Die Hochdruckpumpe 8 ist Bestandteil der Entwässerungseinheit 3. Die Feinfraktion 1 kann mittels der Entwässerungseinheit 3 auf diese Weise vor der Reinigung von PFAS mit Wasser 2 einem Druck ausgesetzt werden. Der Befüllungsdruck beträgt insbesondere von 5 bar bis 8 bar, im Ausführungsbeispiel von 6 bar bis 7 bar.

Die als Membranfilterpresse ausgebildete Entwässerungseinheit 3 ist eine besondere Art der Kammerfilterpresse. Zusätzlich umfasst die als Membranfilterpresse ausgebildete Entwässerungseinheit 3 eine Nachpresseinheit 5. Die Nachpresseinheit 5 ist im Ausführungsbeispiel zwischen der Innenseite des Druckraums 6 und dem Filterelement 18 angeordnet. Die Nachpresseinheit 5 liegt unmittelbar an der Innenseite des Druckraums 6 an. Die Nachpresseinheit 5 liegt unmittelbar an dem Filterelement 18 an. Das Filterelement 18 liegt mittelbar über die Nachpresseinheit 5 an der Innenseite des Druckraums 6 an. Die Nachpresseinheit 5 umfasst eine Membran. Die Membran ist flexibel und undurchlässig, insbesondere undurchlässig für die Feinfraktion 1, insbesondere undurchlässig für Flüssigkeit. Die Nachpresseinheit 3 weist einen Hohlraum auf, der durch die Membran begrenzt ist. Die Membran ist flexibel. Der Hohlraum kann beispielsweise mit Wasser oder Luft gefüllt werden. Hierbei dehnt sich die Nachpresseinheit 5 aus. Die Nachpresseinheit 5 wird aufgebläht. Die Nachpresseinheit 5 übt Druck auf die im Druckraum 6 befindliche Feinfraktion 1 aus. Hierbei wird das effektive Volumen des Druckraums 6 verringert.

Nachdem die Feinfraktion 1 mit der Hochdruckpumpe 8 mit einem Druck insbesondere von 5 bar bis 8 bar, im Ausführungsbeispiel von 6 bar bis 7 bar dem Druckraum 6 zugeführt wurde, wird die Feinfraktion mittels der Nachpresseinheit 5 in den Druckraum 6 gepresst. Auf die Feinfraktion 1 im Druckraum 6 wirkt dann ausschließlich der von der Nachpresseinheit 5 erzeugte Druck. Der Druck der Hochdruckpumpe 8 wirkt dann nicht mehr auf die Feinfraktion 1. Es kann vorgesehen sein, dass die Öffnung in der Kopfplatte 13 verschlossen ist, so dass der Schlammzulauf 15 geschlossen ist. Die Feinfraktion 1 wird mittels der Nachpresseinheit 5 zur Vermeidung von Wegigkeiten für Flüssigkeit, insbesondere für Wasser 2, zwischen der Feinfraktion 1 und der Entwässerungseinheit 3 in den Druckraum 6 der Entwässerungseinheit 3 gepresst. So wird vermieden, dass Flüssigkeit, insbesondere Wasser 2, sich einen Weg zwischen dem Rand des Druckraums 6 und der Feinfraktion 1 sucht. Außerdem wird vermieden, dass die Feinfraktion 1 aufgrund der Schwerkraft und des während der Reinigung durch Wasser 2 geringeren Drucks auf die Feinfraktion 1 nicht im Druckraum 6 gehalten ist.

Die Nachpresseinheit 5 übt auf die Feinfraktion 1 einen Druck von mindestens 2 bar aus. Die Nachpresseinheit 5 übt auf die Feinfraktion 1 einen Druck von maximal 6 bar aus. Die Nachpresseinheit 5 übt auf die Feinfraktion 1 Druck von 2 bar bis 6 bar, im Ausführungsbeispiel von 3 bar bis 5 bar aus. Dadurch ist die Feinfraktion 1 in der Entwässerungseinheit 3 unter Vermeidung von Wegigkeiten für Flüssigkeit, insbesondere für das Wasser 2, insbesondere für das Filtrationswasser 4, und mit immer noch hinreichend großen Freiräumen innerhalb der Feinfraktion 1 gehalten.

Beim Auspressen der Feinfraktion 1 im Druckraum 6 wird Filtrationswasser 4 aus der Feinfraktion 1 herausgepresst. Das Filtrationswasser 4 verlässt den Druckraum 6 durch die erste Druckraumöffnung 16 und/oder durch die zweite Druckraumöffnung 17. Das Filtrationswasser 4 wird über die erste Druckraumleitung 11 und/oder die zweite Druckraumleitung 17 von dem Druckraum 6 weg geführt. Auf diese Weise kann das Filtrationswasser 4, insbesondere für eine Nachbehandlung, gesammelt werden.

Im Ausführungsbeispiel umfasst jeder Druckraum 6 je eine erste Druckraumleitung 16 und/oder eine zweite Druckraumleitung 17. Die ersten Druckraumleitungen 16 sind zu einer ersten Sammelleitung 21 zusammengeführt. Die zweiten Druckraumleitungen 17 sind zu einer zweiten Sammelleitung 22 zusammengeführt.

Nach der Entwässerung der Feinfraktion 1 erfolgt die Reinigung der Feinfraktion 1 mittels Wasser 2. Dem Wasser 2 ist ein Tensid und/oder ein Alkohol und/oder ein anderes organisches Lösungsmittel und/oder ein Biopolymer zugemischt. Es kann auch die Beimischung verschiedener Tenside und/oder Alkohole und/oder organischer Lösungsmittel und/oder Biopolymere vorgesehen sein. Insbesondere können dem Wasser 2 kationische, neutrale, anionische und/oder zwitterionischeTenside beigemischt werden. Vorteilhaft wird als Alkohol zur Beimischung zu dem Wasser Isopropanol und/oder Ethanol verwendet. Zweckmäßig wird als Biopolymer zur Beimischung zu dem Wasser ein Protein und/oder Stärke verwendet. Es kann aber auch vorgesehen sein, dass das Wasser 2 Reinwasser ist und kein weiterer Stoff beigemischt ist. Das Wasser 2 ist zur Reinigung der im Druckraum 6 befindlichen Feinfraktion 1 von PFAS vorgesehen.

Insbesondere während die Feinfraktion 1 mittels der Nachpresseinheit 5 in den Druckraum 6 gedrückt wird, insbesondere nach Ablauf einer für die Entwässerung vorgesehenen Entwässerungszeitspanne, wird dem Druckraum 6 durch die erste Druckraumleitung 11 oder durch die zweite Druckraumleitung 12 Wasser 2 zugeführt. In diesem Verfahrensschritt erfolgt die Reinigung der Feinfraktion 1 mit Wasser 2. Im Ausführungsbeispiel wird dem Druckraum 6 ausschließlich durch die erste Druckraumleitung 16 Wasser 2 zugeführt. Die zweite Druckraumleitung 17 dient währenddessen als Ablauf für das Wasser 2. Das Wasser 2 tritt durch die erste Druckraumöffnung 16 in den Druckraum 6 ein. Das Wasser 2 strömt ausgehend von der ersten Druckraumöffnung 16 durch die Feinfraktion 1 hin zur zweiten Druckraumöffnung 17. Insbesondere ist die Entwässerungseinheit 3 so ausgelegt, dass die zweite Druckraumöffnung 17 im bestimmungsgemäßen Betrieb der Entwässerungseinheit 3 höher liegt als die erste Druckraumöffnung 16. Das Wasser 2 strömt entgegen der Gewichtskraft nach oben durch die Feinfraktion 1. Beim Durchströmen der Feinfraktion 1 reinigt das Wasser 2 die Feinfraktion 1 von PFAS. PFAS wird im Wasser 2 gelöst. Das Wasser 2 verlässt den Druckraum 6 gemeinsam mit dem darin gelösten PFAS durch die zweite Druckraumöffnung 17. Das Wasser 2 wird gemeinsam mit dem darin gelösten PFAS durch die zweite Druckraumleitung abgeführt. Insbesondere wird das Wasser 2 zusammen mit dem darin gelösten PFAS durch die zweite Sammelleitung abgeführt. Es kann vorgesehen sein, dass der Schlammzulauf 15 während der Reinigung mit Wasser 2 geschlossen ist. Beispielsweise kann die Öffnung in der Kopfplatte 13 verschlossen sein.

Das Wasser 2 zur Reinigung der Feinfraktion 1 wird so durch die Entwässerungseinheit 3 geleitet, dass es die Feinfraktion in einer Waschrichtung 30 durchströmt. Die Waschrichtung 30 verläuft ähnlich der Raumdiagonale eines Würfels durch den Druckraum 6. Die Waschrichtung 30 verläuft in Richtung von der ersten Druckraumöffnung 16 hin zu der zweiten Druckraumöffnung 17. Die erste Druckraumöffnung 16 und die zweite Druckraumöffnung 17 sind bezüglich der Bewegungsrichtung 50 in einem Abstand zueinander angeordnet. Die erste Druckraumöffnung 16 ist in einer ersten Filterplatte 14 und die zweite Druckraumöffnung 17 in einer unmittelbar benachbart zu der ersten Filterplatte 14 angeordneten zweiten Filterplatte 14 angeordnet. Die Entwässerungseinheit 3 besitzt in Einsatzlage eine Hochrichtung 49. Die Hochrichtung 49 verläuft senkrecht zu der Bewegungsrichtung 50. Die Hochrichtung 49 verläuft senkrecht zu einer Horizontalebene, auf der die Entwässerungseinheit 3 in Einsatzlage steht. Die Hochrichtung 49 zeigt ausgehend von der Horizontalebene nach oben. Die zweite Druckraumöffnung 17 ist bezüglich der Hochrichtung 49 höher als die erste Druckraumöffnung 16 angeordnet. Die Entwässerungseinheit 3 besitzt in Einsatzlage eine in Fig. 4 dargestellte Querrichtung 48. Die Querrichtung 48 verläuft senkrecht zu der Bewegungsrichtung 50. Die Querrichtung 48 verläuft senkrecht zu der der Hochrichtung 49. Die Die Querrichtung 48 verläuft in Einsatzlage der Entwässerungseinheit 3 parallel zu der Horizontalebene. Die erste Druckraumöffnung 16 und die zweite Druckraumöffnung 17 sind bezüglich der Querrichtung 48 in einem Abstand zueinander angeordnet.

In einem von der Bewegungsrichtung 50, der Hochrichtung 49 und der Querrichtung 48 aufgespannten Koordinatensystem verläuft die Waschrichtung 30 in Richtung der zugehörigen Raumdiagonale. Die Waschrichtung 30 schließt mit jeder Koordinatenebene einen Winkel ein. Alle Winkel sind betragsmäßig gleich groß.

Dadurch, dass das Wasser 2 den Druckraum 6 in Waschrichtung 30 durchströmt, durchströmt es einen großen Teil der zu reinigenden Feinfraktion 1 verlässlich.

Bei der dem Reinigungsschritt vorangehenden Entwässerung der Feinfraktion 1 wird Filtrationswasser 4 aus der Feinfraktion 1 herausgepresst. Das Filtrationswasser 4 strömt durch die Feinfraktion zumindest auch in einer Filtrationsrichtung 20. Die Filtrationsrichtung 20 verläuft von dem Schlammzulauf 15 in der Mitte des Druckraums 6 hin zu der ersten Druckraumöffnung 16. Die Filtrationsrichtung 20 verläuft entgegengesetzt zu der Waschrichtung 30.

Reinigung der Feinfraktion 1 und Entwässerung der Feinfraktion 1 erfolgen zumindest teilweise im Gegenstromverfahren.

Die Feinfraktion 1 kann mittels der Entwässerungseinheit 3 nach der Reinigung von PFAS mit Wasser 2 einem Druck ausgesetzt werden. Mittels der Nachpresseinheit 5 wird die Feinfraktion 1 nach der Reinigung von PFAS mit Wasser 2 einem Druck von mindestens 12 bar, im Ausführungsbeispiel von mindestens 15 bar ausgesetzt. Hierbei erfolgt die endgültige Entwässerung der Feinfraktion 1. Während dieses Entwässerungsschritts ist der Schlammzulauf 15 geschlossen. Insbesondere ist die Öffnung in der Kopfplatte 13 geschlossen.

Es erfolgt also zunächst ein erster Entwässerungsschritt, dann ein Reinigungsschritt und anschließend ein zweiter Entwässerungsschritt. Bei den Entwässerungsschritten werden die Druckraumleitungen 16 und 17 als Abläufe für das Filtrationswasser 4 genutzt. Bei dem Reinigungsschritt wird die erste Druckraumleitung 11 als Zulauf für das Wasser 2 und die zweite Druckraumleitung 17 als Ablauf für das Wasser 2 genutzt. Die Entwässerungseinheit 3 ist so ausgelegt, dass die Druckraumleitungen 16 und 17 durch Betätigung entsprechender Ventile zwischen diesen beiden Nutzungszuständen hin- und hergeschaltet werden können.

Nach dem letzten Entwässerungsschritt wird die Presseinheit 9 gelöst und drückt die Filterplatten 14 dann nicht mehr gegen die Kopfplatte 13. Die Presseinheit 9 wird in Bewegungsrichtung 50 von der Kopfplatte 13 wegbewegt. Die Filterplatten 14 werden dann in Richtung weg von der Kopfplatte 13 bewegt. Dabei werden die Filterplatten 14 relativ zueinander so voneinander entfernt, dass die gereinigte Feinfraktion 1 aus der Entwässerungseinheit 3 entnehmbar ist.

Durch die Verwendung einer Filtermembranpresse zur Reinigung der Feinfraktion eines mit PFAS verunreinigten Bodens können Reinigung und Entwässerung der Feinfraktion 1 ohne Ortswechsel der Feinfraktion 1 im selben Gerät stattfinden. Ein erneuter Aufschluss der Feinfraktion 1 nach der Entwässerung für eine eventuell danach erfolgende Reinigung der Feinfraktion mit Wasser ist nicht erforderlich. Die zuvor beschriebenen Verfahrensschritte lassen sich alle mit der Filtermembranpresse ausführen.

## Patentansprüche

1. Verfahren zur Reinigung von mit per- und polyfluorierten Alkylsubstanzen (PFAS) verunreinigtem Boden von PFAS, wobei der Boden ganz oder teilweise in einer Feinfraktion (1) vorliegt,
**dadurch gekennzeichnet, dass** die Feinfraktion (1) zur Reinigung von PFAS mit Wasser (2) gewaschen wird.

2. Verfahren nach Anspruch 1,
**dadurch gekennzeichnet, dass** die Feinfraktion (1) vor der Reinigung von PFAS mit Wasser (2) einem Druck von 5 bar bis 8 bar, insbesondere von 6 bar bis 7 bar, ausgesetzt wird.

3. Verfahren nach Anspruch 1 oder 2,
**dadurch gekennzeichnet, dass** die Feinfraktion (1) während der Reinigung von PFAS mit Wasser (2) einem Druck von mindestens 1,5 bar, insbesondere von mindestens 2 bar, insbesondere von mindestens 3 bar, ausgesetzt wird.

4. Verfahren nach Anspruch 3,
**dadurch gekennzeichnet, dass** die Feinfraktion (1) nach der Reinigung von PFAS mit Wasser (2) einem Druck von mindesten 12 bar, insbesondere von mindestens 15 bar, ausgesetzt wird.

5. Verfahren nach einem der Ansprüche 1 bis 4,
**dadurch gekennzeichnet, dass** die Feinfraktion (1) in einer Entwässerungseinheit (3) entwässert wird, und dass die Reinigung von PFAS mit Wasser (2) in derselben Entwässerungseinheit (3) erfolgt, und insbesondere dass die Feinfraktion (1) im Anschluss an die Reinigung von PFAS in der Entwässerungseinheit (3) ohne zwischenzeitliche Entfernung der Feinfraktion (1) aus der Entwässerungseinheit (3) in der Entwässerungseinheit (3) entwässert wird.

6. Verfahren nach Anspruch 5,
**dadurch gekennzeichnet, dass** mittels der Entwässerungseinheit (3) Filtrationswasser (4) aus der Feinfraktion (1) gepresst wird, dass das Filtrationswasser (4) die Feinfraktion (1) zumindest auch in eine Filtrationsrichtung (20) verlässt, dass das Wasser (2) so durch die Entwässerungseinheit (3) geleitet wird, dass es die Feinfraktion (1) in einer Waschrichtung (30) durchströmt, und dass zumindest ein vektorieller Anteil der Filtrationsrichtung (20) und ein vektorieller Anteil der Waschrichtung (30) entgegengesetzt zueinander orientiert sind, und insbesondere dass die Waschrichtung (30) und die Filtrationsrichtung (20) entgegengesetzt zueinander verlaufen.

7. Verfahren nach Anspruch 5 oder 6,
**dadurch gekennzeichnet, dass** die Entwässerungseinheit (3) eine Nachpresseinheit (5) aufweist, dass die Feinfraktion (1) mittels der Nachpresseinheit (5) zur Vermeidung von Wegigkeiten für das Wasser (2) zwischen der Feinfraktion (1) und der Entwässerungseinheit (3) in einen Druckraum (6) der Entwässerungseinheit (3) gepresst wird.

8. Verfahren nach einem der Ansprüche 5 bis 7,
**dadurch gekennzeichnet, dass** die Feinfraktion (1) mittels der Entwässerungseinheit (3) einem Druck ausgesetzt werden kann, und insbesondere, dass die Feinfraktion (1) mittels der Entwässerungseinheit (3) vor und/oder während der Reinigung von PFAS mit Wasser (2) einem Druck ausgesetzt werden kann.

9. Verfahren nach Anspruch 5 bis 8,
**dadurch gekennzeichnet, dass** die Feinfraktion (1) mittels der Entwässerungseinheit (3) nach der Reinigung von PFAS mit Wasser (2) einem Druck ausgesetzt werden kann.

10. Verfahren nach einem der Ansprüche 5 bis 9,
**dadurch gekennzeichnet, dass** die Entwässerungseinheit (3) eine Membranfilterpresse ist.

11. Verfahren nach einem der Ansprüche 5 bis 10,
**dadurch gekennzeichnet, dass** der Trockensubstanzgehalt der Feinfraktion (1) zu Beginn des Verfahrens maximal 30 Gew.-%, insbesondere von 10 Gew.-% bis 30 Gew.-%, insbesondere von 15 Gew.-% bis 25 Gew.-%, beträgt, und dass der Trockensubstanzgehalt der Feinfraktion (1) nach dem vollständigen Entwässern mittels der Entwässerungseinheit (3) von 60 Gew.-% bis 80 Gew.-%, insbesondere von 65 Gew.-% bis 75 Gew.-%, beträgt.

12. Verfahren nach einem der Ansprüche 1 bis 11,
**dadurch gekennzeichnet, dass** das Eluat der Feinfraktion (1) vor der Reinigung von PFAS mit Wasser (2) eine PFAS-Massenkonzentration von mindestens 15,0 µg/l, insbesondere von 15,0 µg/l bis 150 µg/l, insbesondere von 150 µg/l bis 500 µg/l, aufweist, und dass das Eluat der Feinfraktion (1) nach der Reinigung von PFAS mit Wasser (2) eine PFAS-Massenkonzentration von maximal 1,0 µg/l, insbesondere von maximal 0,1 µg/l aufweist, insbesondere dass der PFAS-Massenanteil der Originalsubstanz vor der Reinigung von PFAS mit Wasser mehr als 30 µg/, insbesondere von 30 µg/kg bis 50 µg/kg, insbesondere bis 500 µg/kg beträgt, insbesondere dass der Massenanteil an PFAS-gesamt nach der Reinigung mit Wasser weniger als 8 µg/kg beträgt, und insbesondere dass der Massenanteil an PFOS (Perfluoroctansulfonsäure) und PFOA (Perfluoroctancarbonsäure) nach der Reinigung mit Wasser jeweils weniger als 3 µg/kg beträgt.

13. Verfahren nach einem der Ansprüche 1 bis 12,
**dadurch gekennzeichnet, dass** die Feinfraktion (1) aus Partikeln besteht, und dass die Partikel einen maximalen Durchmesser von 100 µm, insbesondere von 80 µm, insbesondere von 65 µm, insbesondere von 63 µm aufweisen.

14. Verfahren nach einem der Ansprüche 1 bis 13,
**dadurch gekennzeichnet, dass** die Reinigung der Feinfraktion (1) von PFAS mit Wasser mit Wasser erfolgt, dem ein Tensid und/oder Alkohol und/oder ein organisches Lösungsmittel und/oder ein Biopolymer zugemischt ist.

15. Verwendung einer Filtermembranpresse zur Reinigung der Feinfraktion (1) eines mit PFAS verunreinigten Bodens.
